# EUROPÄISCHE PATENTANMELDUNG

(11) **EP 3 412 880 A1**
(43) Veröffentlichungstag der Anmeldung: **12.12.2018**
(21) Anmeldenummer: 18173716.4
(22) Anmeldetag: 23.05.2018
(51) Int. Cl.: F01N 3/023, B01D 53/94, F01N 3/10, F01N 9/00, F02P 9/00, F02P 23/04

(54) **VERFAHREN ZUM REGENERIEREN EINES PARTIKELFILTERS IN DER ABGASANLAGE EINES VERBRENNUNGSMOTORS SOWIE VERBRENNUNGSMOTOR**

(30) Priorität: 08.06.2017 DE 102017209693
(71) Anmelder: VOLKSWAGEN AKTIENGESELLSCHAFT, 38440 Wolfsburg (DE)
(72) Erfinder: Sudschajew, David, 38527 Abbesbüttel (DE)

(57) **Zusammenfassung**

Die Erfindung betrifft ein Verfahren zur Regeneration eines Partikelfilters in einer Abgasanlage eines Verbrennungsmotors. Dabei wird der Verbrennungsmotor in einem Normalbetrieb mit einem stöchiometrischen Verbrennungsluftverhältnis betrieben. Zur Regeneration des Partikelfilters ist vorgesehen, dass das Verbrennungsluftverhältnis in Richtung mager verstellt wird und gleichzeitig die Verbrennung in den Brennräumen des Verbrennungsmotors durch eine entsprechende Anpassung der Zündenergie, der Zünddauer und/oder der Zündhäufigkeit stabilisiert wird, um Zündaussetzer und den damit verbundenen unkontrollierten Eintrag von unverbranntem Kraftstoff in die Abgasanlage zu vermeiden. Durch das erfindungsgemäße Verfahren zur Regeneration des Partikelfilters ist eine schnellere und emissionsärmere Regeneration des Partikelfilters möglich.

Die Erfindung betrifft ferner einen Verbrennungsmotor mit einer Abgasanlage und einem Steuergerät, welcher dazu eingerichtet ist, ein erfindungsgemäßes Verfahren durchzuführen.

## Beschreibung

Die Erfindung betrifft ein Verfahren zum Regenerieren eines Partikelfilters im Abgaskanal eines Verbrennungsmotors sowie einen Verbrennungsmotor mit einem Abgasnachbehandlungssystem gemäß den Oberbegriffen der unabhängigen Patentansprüche.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem überstöchiometrischen Verbrennungsluftverhältnis sowie kalter Zylinderwände während des Kaltstarts. Die Kaltstartphase ist somit maßgeblich für die Einhaltung der gesetzlich vorgeschriebenen Partikelgrenzwerte. Im Fahrbetrieb wird ein solcher Ottopartikelfilter weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Durch kann es bedingt durch den Magerbetrieb des Verbrennungsmotors in Kombination mit den innermotorischen Heizmaßnahmen zu zyklischen Zündaussetzern kommen. Dabei gelangt unverbrannter Kraftstoff in die Abgasanlage und kann somit den Partikelfilter oder eine katalytisch wirksame Beschichtung des Partikelfilters beschädigen. Ferner dauert die Regeneration des Partikelfilters vergleichsweise lange, da nur ein geringer Luftüberschuss beim Verbrennungsluftverhältnis eingestellt werden kann, welcher durch die Magerlauffähigkeiten des Verbrennungsmotors begrenzt ist. Dies führt dazu, dass für eine vollständige Regeneration des Partikelfilters der Verbrennungsmotor lange mit einem überstöchiometrischen Verbrennungsluftverhältnis betrieben werden muss, wodurch die Stickoxidemissionen ansteigen, da dem Abgas bei überstöchiometrischem Betrieb ein Reduktionsmittel zur Reduzierung der Stickoxide fehlt.

Bei einem Verbrennungsmotor mit einem Sekundärluftsystem ist eine Regeneration des Partikelfilters durch einen unterstöchiometrischen Betrieb des Verbrennungsmotors in Kombination mit der Einbringung von Sekundärluft in den Abgaskanal bekannt. Dazu ist der Partikelfilter stromabwärts eines Drei-Wege-Katalysators angeordnet, wobei die Sekundärluft stromabwärts des Drei-Wege-Katalysators und stromaufwärts des Partikelfilters in den Abgaskanal eingeleitet wird. Dabei wird der Drei-Wege-Katalysator mit unterstöchiometrischem Abgas durchströmt, sodass es zu einem Fettdurchbruch durch den Drei-Wege-Katalysator kommt. An der Oberfläche des Partikelfilters wird dieses unterstöchiometrische Abgas mit dem Sauerstoff aus der Sekundärlufteinbringung exotherm umgesetzt und zum Aufheizen des Partikelfilters genutzt. Hat der Partikelfilter die Regenerationstemperatur zur Oxidation des im Partikelfilters zurückgehaltenen Rußes erreicht, wird der Verbrennungsmotor mit stöchiometrischem Verbrennungsluftverhältnis betrieben und der im Partikelfilter zurückgehaltene Ruß durch die Sekundärluft exotherm umgesetzt. Dabei erhöhen sich durch den unterstöchiometrischen Betrieb des Verbrennungsmotors die Emissionen an unverbrannten Kohlenwasserstoffen (HC) und Kohlenstoffmonoxid (CO), während es bei diesem Verfahren keine Probleme mit erhöhten Sickoxidemissionen (NOx) gibt.

Nachteilig an einem solchen Verfahren ist jedoch, dass die meisten Kraftfahrzeuge kein Sekundärluftsystem besitzen und somit eine Umsetzung des vorgeschlagenen Verfahrens ausscheidet. Daher ist eine Regeneration des Partikelfilters nur durch einen überstöchiometrischen Betrieb des Verbrennungsmotors möglich.

Nachteilig an dem bekannten Verfahren zur Regeneration des Partikelfilters ist jedoch, dass die Regeneration des Partikelfilters nicht emissionsneutral erfolgen kann, die Regeneration vergleichsweise lange dauert, da die Magerlauffähigkeit des Motors durch ein maximales Verbrennungsluftverhältnis von etwa λ = 1,06 begrenzt ist, zyklische Zündaussetzer in Kauf genommen werden müssen, insbesondere wenn ein Aufheizen des Partikelfilters und ein Magerbetrieb kombiniert werden. Zudem ist ein Magerbetrieb bei niedriger Teillast aufgrund der Zündaussetzer-Problematik teilweise gar nicht möglich. Schlechte Kraftstoffqualität kann die mit dem Magerbetrieb und/oder mit dem erhöhten Abgasgegendruck verbundene Laufruheproblematik noch verstärken. Zudem ist eine emissionsneutrale Regeneration eines Vier-Wege-Katalysators als erste Komponente stromabwärts eines Auslasses des Verbrennungsmotors nicht möglich.

Alternativ ist eine (Teil-)Regeneration des Partikelfilters durch Schubabschaltung bekannt. Diese ist jedoch nicht planbar und hängt stark vom Fahrprofil des Fahrers sowie dem Einsatzgebiet des Kraftfahrzeuges ab. Eine länger andauernde Schubphase kann zudem, insbesondere bei bereits heißem Partikelfilter, zu einem unkontrollierten Rußabbrand und somit zu einer thermischen Schädigung des Partikelfilters führen.

Aus dem Stand der Technik sind zudem Verfahren bekannt, mit denen der Motorlauf eines Verbrennungsmotors bei einem Magerbetrieb stabilisiert werden kann. Aus der DE 10 2010 008 013 A1 sind ein System und ein Verfahren zum Betreiben eines Mehrzylinder-Verbrennungsmotors bekannt. Dabei hat der Verbrennungsmotor an jedem seiner Brennräume mindestens eine Zündkerze, wobei die Zündenergie und/oder die Zündungsanzahl pro Verbrennungszyklus angepasst wird, wenn ein dem jeweiligen Zylinder des Verbrennungsmotors zugeordnetes lonisationserfassungssignal eine Fehlzündung anzeigt. Dieses System und das damit durchgeführte Verfahren sind jedoch vergleichsweise aufwendig und kostenintensiv, da für jeden Zylinder ein zusätzlicher Sensor zur Erfassung des lonisationserfassungssignals notwendig ist.

Aus der DE 10 2014 015 486 A1 ist ein Verfahren zur betriebsarten- und kennfeldabhängigen, umschaltbaren Funkenbandzündung bekannt. Dabei soll eine Vielfach-Funkenzündung ermöglicht werden, wobei durch einen im Motorsteuergerät abgelegten Parametersatz die unterschiedlichen Zündanforderungen direkt an die Zündspule ausgegeben werden. Dabei kann auf ein zusätzliches und aufwendiges Zündsteuergerät verzichtet werden und die Elektronik auf der Zündspule vergleichsweise kostengünstig ausgeführt werden.

Der Erfindung liegt nun die Aufgabe zugrunde, eine schnelle und emissionsarme Regeneration eines Partikelfilters durchzuführen und die aus dem Stand der Technik bekannten Nachteile zu überwinden.

Erfindungsgemäß wird die Aufgabe durch ein Verfahren zur Regeneration eines Partikelfilters oder eines Vier-Wege-Katalysators in einer Abgasanlage eines fremdgezündeten Verbrennungsmotors gelöst, welches folgende Schritte umfasst:
- Betreiben des Verbrennungsmotors mit einem stöchiometrischen Verbrennungsluftverhältnis (λ=1), wobei das Abgas des Verbrennungsmotors durch die Abgasanlage geleitet wird und die im Abgas enthaltenen Rußpartikel sich an der Oberfläche des Partikelfilters oder des Vier-Wege-Katalysators abscheiden,
- Einleiten einer Regeneration des Partikelfilters oder des Vier-Wege-Katalysators, wenn der Partikelfilter einen festgelegten Beladungszustand erreicht oder überschritten hat,
- Regeneration des Partikelfilters oder des Vier-Wege-Katalysators, wobei der Verbrennungsmotor mit einem überstöchiometrischen Verbrennungsluftverhältnis (λ>1) betrieben wird und zeitgleich die Zündenergie, die Zünddauer und/oder die Anzahl der Zündungen pro Verbrennungszyklus erhöht werden, um eine Zündung des überstöchiometrischen Verbrennungsluftverhältnisses in den Brennräumen des Verbrennungsmotors sicherzustellen.

Durch das erfindungsgemäße Verfahren kann eine Regeneration des Partikelfilters oder des Vier-Wege-Katalysators bei einem höheren Luftüberschuss erfolgen, wodurch die Regeneration des Partikelfilters schneller abgeschlossen werden kann. Zudem führt ein höherer Luftüberschuss dazu, dass die Rohemissionen bei der Verbrennung, insbesondere die Rohemissionen an Stickoxiden, zurückgehen, da mit dem Luftüberschuss die Verbrennungstemperatur abnimmt und somit weniger thermisch induzierte Stickoxide bei der Verbrennung des Verbrennungsluftgemischs in den Brennräumen des Verbrennungsmotors entstehen. Durch die gleichzeitige Erhöhung der Zündenergie, der Zünddauer und/oder der Anzahl der Zündfunken pro Verbrennungszyklus wird die Verbrennung bei überstöchiometrischem Verbrennungsluftverhältnis stabilisiert, sodass es nicht zu Zündaussetzern kommt. Dadurch wird vermieden, dass unverbrannter Kraftstoff in den Abgaskanal gelangt und dort zu Schädigungen der Abgasnachbehandlungskomponenten führt. Zusätzlich wird die Laufruhe des Verbrennungsmotors erhöht, wodurch die Regeneration des Partikelfilters im Wesentlichen unbemerkt für den Führer des Kraftfahrzeuges erfolgen kann. Zudem wird eine Regeneration des Partikelfilters oder des Vier-Wege-Katalysator auch bei einem Schwachlastbetrieb des Verbrennungsmotors ermöglicht, bei dem eine Regeneration ohne Anpassung der Zündenergie, Zünddauer oder Anzahl der Zündfunken nicht möglich wäre.

Durch die in den abhängigen Ansprüchen aufgeführten Merkmale sind vorteilhafte Verbesserungen und Weiterbildungen des im unabhängigen Anspruchs angegebenen Verfahrens zur Regeneration eines Partikelfilters möglich.

In einer bevorzugten Ausführungsform des Verfahrens ist vorgesehen, dass die Zündung des Verbrennungsluftgemischs während der Regeneration des Partikelfilters oder des Vier-Wege-Katalysators durch eine Mehrfachzündung erfolgt. Durch eine Mehrfachzündung wird die Wahrscheinlichkeit erhöht, dass der Zündfunke auf ein brennfähiges Verbrennungsluftgemisch trifft und dieses entflammen kann. Dabei können die mehreren Zündfunken der Mehrfachzündung sowohl zeitgleich, als auch bevorzugt zeitversetzt erfolgen. Insbesondere wird die Wahrscheinlichkeit erhöht, dass ein zündfähiges Verbrennungsluftgemisch in dem Brennraum des Verbrennungsmotors, welches durch den Hauptfunken einer Zündkerze nicht entflammt wurde, durch einen Folgefunken entflammt wird. Dabei wird der Zeitpunkt des Hauptzündfunkens zeitlich nicht verändert, sodass die Folgefunken zeitlich nach dem Zündfunken im Normalbetrieb des Verbrennungsmotors emittiert werden.

In einer bevorzugten Ausführungsform des Verfahrens ist vorgesehen, dass die Mehrfachzündung in Form einer Funkenbandzündung erfolgt. Durch eine Funkenbandzündung können auf vergleichsweise einfache Art und Weise mit einer Zündkerze zwei- oder mehr Zündfunken in einem Verbrennungszyklus des jeweiligen Brennraums des Verbrennungsmotors erzeugt werden. Durch eine Funkenbandzündung können eine Mehrzahl von Zündfunken in einem kurzen Zeitraum, das heißt innerhalb eines Verbrennungszyklus pro Brennraum emittiert werden. Die Funkenanzahl ist dabei abhängig von der Drehzahl des Verbrennungsmotors, da mit steigender Drehzahl die Anzahl der möglichen Zündfunken pro Verbrennungszyklus sinkt. Durch eine Funkenbandzündung werden die Laufruhe des Verbrennungsmotors stabilisiert und Zündaussetzer in dem Magerbetrieb während der Regeneration des Partikelfilters oder des Vier-Wege-Katalysators vermieden. Alternativ kann eine Mehrfachzündung auch durch eine Corona-Zündung oder eine Laserzündung realisiert werden, jedoch bietet die Funkenbandzündung die mit Abstand kostengünstigste Lösung zur Mehrfachzündung. Zudem ist durch eine hohe Anzahl von Zündfunken bei einer Funkenbandzündung eine weitere Abmagerung des Verbrennungsluftverhältnisses möglich, wodurch die Regeneration nochmals beschleunigt ablaufen kann und die Rohemissionen weiter gesenkt werden.

Gemäß einer bevorzugten Ausgestaltung des Verfahrens ist vorgesehen, dass das überstöchiometrische Verbrennungsluftverhältnis während der Regeneration des Partikelfilters größer als 1,06, vorzugsweise größer als 1,1, insbesondere in einem Bereich zwischen 1,1 und 1,25, gewählt wird. Während beim Normalbetrieb des Verbrennungsmotors und einer einfachen Zündung die Magerlauffähigkeit des Verbrennungsmotors begrenzt ist und schon ab einem Verbrennungsluftverhältnis von λ=1,06 Zündaussetzer auftreten können, wird durch die Anhebung der Zündenergie, die Verlängerung der Zünddauer und/oder die Vergrößerung der Anzahl der Zündfunken die Magerlauffähigkeit des Verbrennungsmotors derart verbessert, dass ein weiteres Abmagern des Verbrennungsluftverhältnisses möglich ist. Besonders vorteilhaft ist ein Verbrennungsluftverhältnis bei einer aktiven Regeneration des Partikelfilters oder des Vier-Wege-Katalysators von 1,1 < λ < 1,25, da dieser Bereich mehrere Vorteile vereint. Zum einen können wie beschrieben die Regenerationszeit und die Rohemissionen des Verbrennungsmotors reduziert werden, zum anderen wird die Gefahr eines unkontrollierten Rußabbrandes auf dem Partikelfilter verringert, da die Abbrandgeschwindigkeit des Rußes durch den mäßigen Sauerstoffüberschuss begrenzt bleibt.

Gemäß einer bevorzugten Ausführung des Verfahrens ist vorgesehen, dass die Zündenergie, die Zünddauer und/oder die Anzahl der Zündfunken nach der vollständigen Regeneration des Partikelfilters oder des Vier-Wege-Katalysators wieder reduziert werden. Dadurch führt das Verfahren nur zu einer sehr geringen Zunahme eines Verschleißes der Zündeinrichtung, insbesondere eines Verschleißes der Zündkerzen, sodass die Lebenserwartung der Zündkomponenten im Wesentlichen unverändert bleibt und die Service-Intervalle zum Wechsel der Zündkerzen nicht verkürzt werden müssen.

In einer bevorzugten Ausführungsform des Verfahren ist vorgesehen, dass die Regeneration des Partikelfilters oder des Vier-Wege-Katalysators bei einer Beladung von 2500 mg Ruß oder mehr eingeleitet wird. Dadurch bleibt die Anzahl der notwendigen Regenerationszyklen zur Regeneration des Partikelfilters oder Vier-Wege-Katalysators begrenzt, sodass im Fahrbetrieb nur selten eine solche Regeneration notwendig ist. Dadurch können der Kraftstoffmehrverbrauch und die Komforteinbußen in der Laufruhe während der Regeneration des Partikelfilters oder des Vier-Wege-Katalysators begrenzt werden.

In einer weiteren bevorzugten Ausführungsform des Verfahrens ist vorgesehen, dass ein Öffnungswinkel einer Drosselklappe in einem Luftversorgungssystem des Verbrennungsmotors zur Regeneration des Partikelfilters oder des Vier-Wege-Katalysators vergrößert wird. Dadurch ist eine stärkere Entdrosselung des Verbrennungsmotors während der Regeneration des Partikelfilters oder des Vier-Wege-Katalysators möglich, wodurch sich nicht nur die Regenerationszeit verkürzt, sondern auch der Kraftstoffverbrauch abnimmt.

Gemäß einer weiteren Verbesserung des Verfahrens ist vorgesehen, dass der Regenerationsphase des Partikelfilters oder des Vier-Wege-Katalysators eine Heizphase vorgeschaltet ist, wobei die Zündung des Verbrennungsluftgemischs während der Heizphase mit der Zünddauer, Zündenergie und Zündanzahl des Normalbetriebs erfolgt. Durch die höheren Umsatzraten während der Regeneration des Partikelfilters kann die Heizphase verkürzt werden und es müssen insbesondere während der Regeneration des Partikelfilters keine oder nur weniger Heizphasen zum Aufheizen des Partikelfilters zwischengeschaltet werden. Dadurch kann der Kraftstoffverbrauch des Verbrennungsmotors während der Regeneration des Partikelfilters oder des Vier-Wege-Katalysators reduziert werden.

In einer alternativen Ausführungsform des Verfahrens ist vorgesehen, dass die Anhebung der Zündenergie, der Zünddauer oder der Anzahl der Zündungen mittels einer Laserzündung erfolgt. Ist der Verbrennungsmotor anstelle von Zündkerzen mittels einer Laserzündung fremdgezündet, so kann alternativ während der Regeneration des Partikelfilters oder des Vier-Wege-Katalysators die durch die Laserzündung eingebrachte Energie erhöht werden, um ein weiteres Abmagern des Verbrennungsgemischs zu ermöglichen.

Ferner ist in einer weiteren alternativen Ausführungsform des Verfahrens vorgesehen, dass die Anhebung der Zündenergie, der Zünddauer oder der Anzahl der Zündungen mittels einer Corona-Zündung erfolgt. Ist der Verbrennungsmotor anstelle von Zündkerzen mittels einer Corona-Zündung fremdgezündet, so kann alternativ während der Regeneration des Partikelfilters oder des Vier-Wege-Katalysators die durch die Corona-Zündung eingebrachte Energie erhöht werden, um ein weiteres Abmagern des Verbrennungsgemischs zu ermöglichen.

Erfindungsgemäß wird ein Verbrennungsmotor mit mindestens einem Brennraum und mindestens einem an dem Brennraum angeordneten Zündelement zur Fremdzündung eines in den mindestens einen Brennraum eingebrachten Verbrennungsluftgemischs, sowie mit einer Abgasanlage, welche mit einem Auslass des Verbrennungsmotors verbunden ist, vorgeschlagen, wobei in der Abgasanlage zumindest ein Partikelfilter und ein Drei-Wege-Katalysator oder ein Vier-Wege-Katalysator angeordnet sind, wobei der Verbrennungsmotor ein Steuergerät aufweist, welches dazu eingerichtet ist, ein erfindungsgemäßes Verfahren durchzuführen, wenn ein maschinenlesbarer Programmcode auf dem Steuergerät ausgeführt wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit gleichen Bezugszeichen gekennzeichnet. Es zeigen:
- Figur 1: ein erstes Ausführungsbeispiel eines Verbrennungsmotors mit einem Abgasnachbehandlungssystem, in dem ein Partikelfilter durch ein erfindungsgemäßes Verfahren zur Regeneration des Partikelfilters regeneriert werden kann;
- Figur 2: ein weiteres Ausführungsbeispiel eines Verbrennungsmotors mit einem Abgasnachbehandlungssystem zur erfindungsgemäßen Regeneration eines Partikelfilters;
- Figur 3: ein weiteres Ausführungsbeispiel eines Verbrennungsmotors mit einem Abgasnachbehandlungssystem zur erfindungsgemäßen Regeneration eines Partikelfilters;
- Figur 4: ein Diagramm zur erfindungsgemäßen Regeneration eines Partikelfilters; und
- Figur 5: ein Diagramm, bei dem die Stickoxid-Emissionen bei einem erfindungsgemäßen Verfahren zur Regeneration eines Partikelfilters im Vergleich zu den Stickoxid-Emissionen bei einer konventionellen Regeneration des Partikelfilter durch ein überstöchiometrisches Verbrennungsluftverhältnis dargestellt sind.

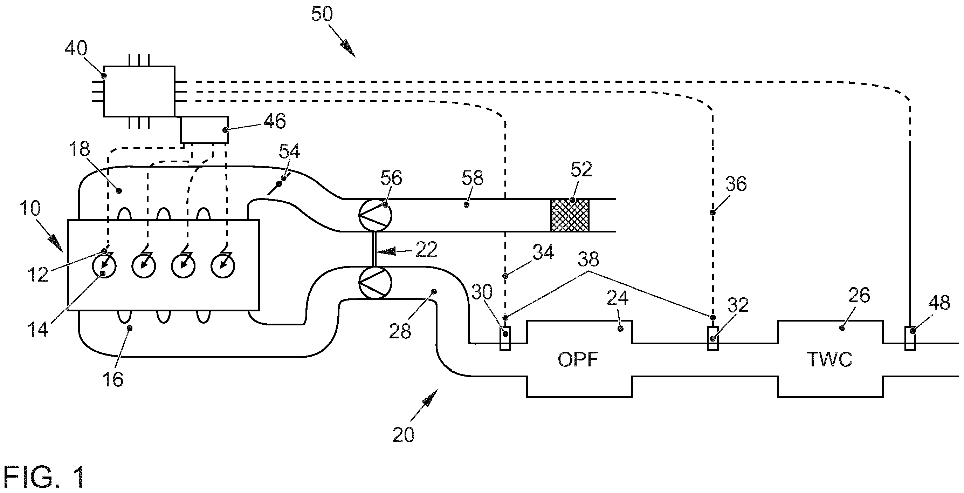

Figur 1 zeigt eine schematische Darstellung eines Verbrennungsmotors 10, dessen Auslass 16 mit einer Abgasanlage 20 verbunden ist. Der Verbrennungsmotor 10 ist als Ottomotor ausgeführt, welcher mittels Zündkerzen 12 fremdgezündet wird, und weist mehrere Brennräume 14 auf. Der Verbrennungsmotor 10 ist vorzugsweise als mittels eines Abgasturboladers 22 aufgeladener Verbrennungsmotor 10 ausgeführt, wobei der Abgasturbolader 22 stromabwärts des Auslasses 16 und stromaufwärts der ersten emissionsmindernden Abgasnachbehandlungskomponente 24, 26, 44 angeordnet ist. Die Abgasanlage 20 umfasst einen Abgaskanal 28, in dem in Strömungsrichtung eines Abgases durch den Abgaskanal 28 ein Partikelfilter 24 und stromabwärts des Partikelfilters 24 ein Drei-Wege-Katalysator 26 angeordnet sind. Der Partikelfilter 24 und der Drei-Wege-Katalysator 26 sind dabei vorzugsweise jeweils motornah, das heißt mit einem Abstand von weniger als 80 cm Abgaslauflänge, insbesondere von weniger als 50 cm Abgaslauflänge, ab dem Auslass 16 des Verbrennungsmotors 10 angeordnet. In der Abgasanlage 20 können zusätzlich weitere Katalysatoren, insbesondere ein weiterer Drei-Wege-Katalysator, ein NOx-Speicherkatalysator oder ein Katalysator zur selektiven katalytischen Reduktion von Stickoxiden angeordnet sein. Stromaufwärts des Partikelfilters 24 ist im Abgaskanal 28 eine erste Lambdasonde 30 angeordnet, mit welcher der Sauerstoffgehalt λ₁ des Abgases stromabwärts des Auslasses 16 und stromaufwärts der ersten Abgasnachbehandlungskomponente, also des Partikelfilters 24, ermittelt werden kann. Stromabwärts des Partikelfilters 24 und stromaufwärts des Drei-Wege-Katalysators 26 ist im Abgaskanal 28 eine zweite Lambdasonde 32 angeordnet, mit welcher der Sauerstoffgehalt λ₂ im Abgaskanal 28 stromabwärts des Partikelfilters 24 und stromaufwärts des Drei-Wege-Katalysators 26 ermittelt werden kann. Die erste Lambdasonde 30 ist über eine erste Signalleitung 34 mit einem Steuergerät 40 des Verbrennungsmotors 10 verbunden. Die zweite Lambdasonde 32 ist über eine zweite Signalleitung 36 mit dem Steuergerät 40 verbunden. Die erste Lambdasonde 34 ist dabei vorzugsweise als Breitband-Lambdasonde ausgebildet. Die zweite Lambdasonde 32 ist dabei vorzugsweise als Sprung-Lambdasonde ausgebildet. Die erste Lambdasonde 30 und die zweite Lambdasonde 32 bilden dabei eine Sensoranordnung 38 aus, mit welcher das Verbrennungsluftverhältnis λ des Verbrennungsmotors 10 geregelt werden kann. Ferner kann in der Abgasanlage 20 ein NOx-Sensor 48 angeordnet sein, um die Stickoxid-Emissionen zu ermitteln und eine On-Board-Diagnose der Abgasnachbehandlungskomponenten 24, 26, 44 zu gewährleisten. Der Partikelfilter 24 kann eine Sauerstoffspeicherfähigkeit OSC_{P} aufweisen, wobei die Befüllung des Sauerstoffspeichers OSC den Beginn der Oxidation des im Partikelfilter 24 zurückgehaltenen Rußes verzögert.

Der Verbrennungsmotor 10 weist ferner einen Einlass 18 auf, welcher mit einem Luftversorgungssystem 50 des Verbrennungsmotors 10 verbunden ist. Das Luftversorgungssystem 50 weist einen Frischluftkanal 58 auf, in dem ein Luftfilter 52 angeordnet ist. Stromabwärts des Luftfilters 52 ist ein Verdichter 56 des Abgasturboladers 22 angeordnet, mit welchem die Frischluft zur besseren Füllung der Brennräume 14 verdichtet wird. Stromabwärts des Verdichters 56 und stromaufwärts des Einlasses 18 des Verbrennungsmotors 10 ist in dem Frischluftkanal 58 eine Drosselklappe 54 angeordnet, mit welcher die dem Verbrennungsmotor 10 zugeführte Menge an Frischluft gesteuert werden kann. Zur Ansteuerung der Zündkerzen 12 ist ein Zündverteiler 46 vorgesehen, mit welchem eine Funkenbandzündung der Zündkerzen 12 durchgeführt werden kann.

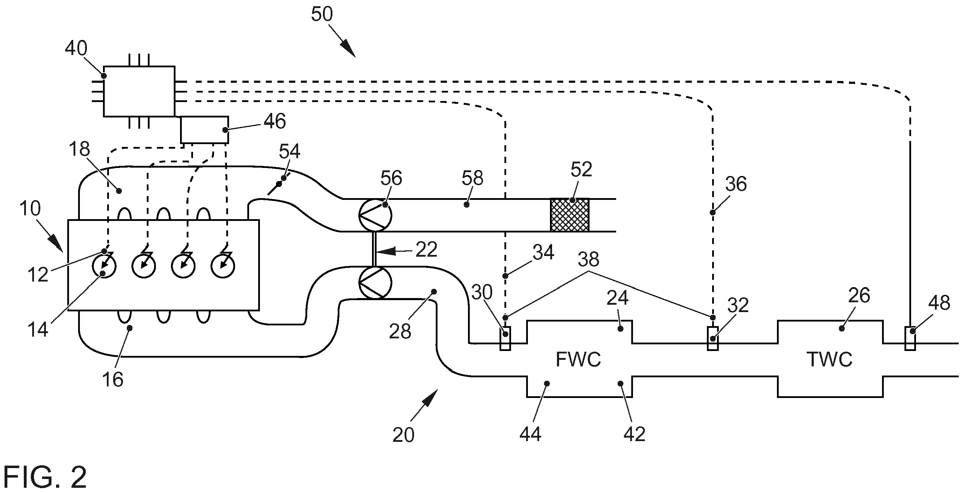

In Figur 2 ist ein weiteres Ausführungsbeispiel eines Verbrennungsmotors mit einem Abgasnachbehandlungssystem dargestellt. Bei im Wesentlichen gleichem Aufbau wie zu Figur 1 ausgeführt, weist der Partikelfilter 24 zusätzlich eine katalytisch wirksame Edelmetallbeschichtung 42, insbesondere eine Beschichtung 42 aus Platin, Palladium oder Rhodium auf und ist als Vier-Wege-Katalysator 44 ausgebildet. Die katalytisch wirksame Beschichtung 42 kann neben der katalytischen Funktion in der Abgasnachbehandlung auch zum Aufheizen des Partikelfilters genutzt werden, wenn unverbrannte Kraftstoffkomponenten und Restsauerstoff exotherm an dieser Beschichtung 42 reagieren. Somit kann das Aufheizen des Partikelfilters 24 auf eine Regenerationstemperatur T_{reg} unterstützt werden. Der Vier-Wege-Katalysator 44 weist eine Sauerstoffspeicherfähigkeit OSC_{FWC} auf, wobei der Sauerstoffspeicher OSC des Vier-Wege-Katalysators 44 zunächst den überschüssigen Sauerstoff aus dem Abgas des Verbrennungsmotors 10 aufnimmt. Ist der Sauerstoffspeicher OSC im Wesentlichen vollständig gefüllt, so kann der Sauerstoffüberschuss zur Oxidation des im Vier-Wege-Katalysator 44 zurückgehaltenen Rußes genutzt werden.

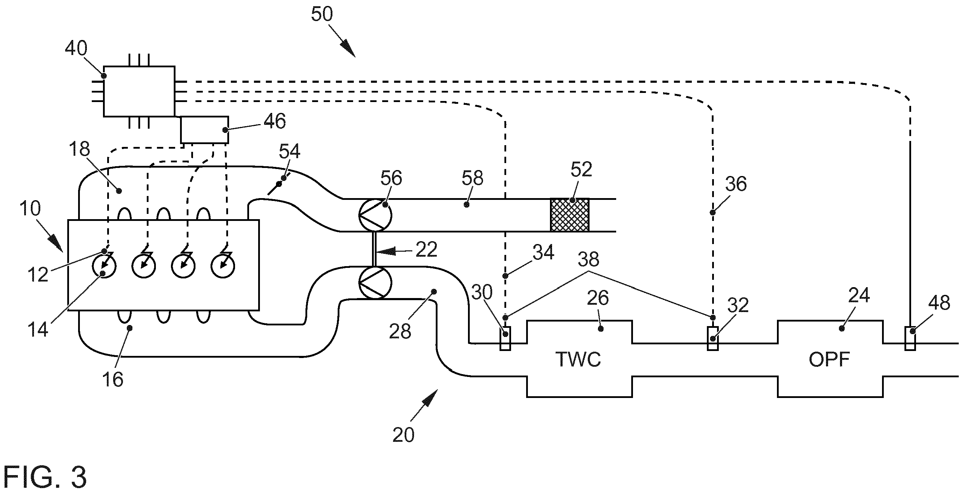

In Figur 3 ist ein weiteres Ausführungsbeispiel eines Verbrennungsmotors mit einem Abgasnachbehandlungssystem dargestellt. Bei im Wesentlichen gleichem Aufbau wie zu Figur 1 ausgeführt, ist der Drei-Wege-Katalysator 26 als erste Komponente des Abgasnachbehandlung stromabwärts des Auslasses 16 des Verbrennungsmotors 10 angeordnet und der Partikelfilter 24 stromabwärts des Drei-Wege-Katalysators. 26. Der Partikelfilter 24 kann als unbeschichteter Partikelfilter oder als Vier-Wege-Katalysator 44 mit einer Drei-Wege-katalytisch wirksamen Beschichtung 42 ausgeführt sein.

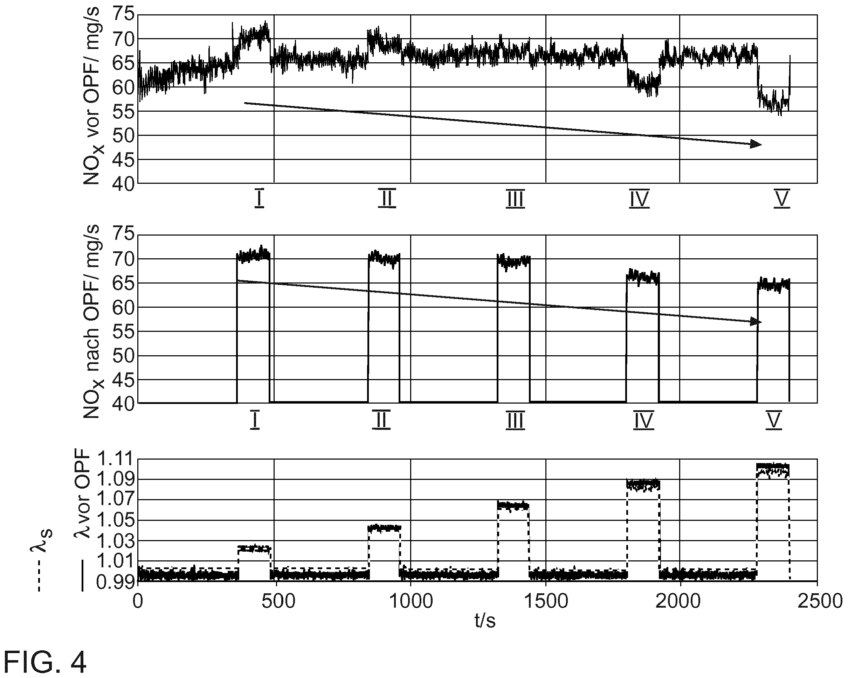

In Figur 4 sind die Vorteile eines erfindungsgemäßen Verfahrens zur Regeneration eines Partikelfilters 24 oder eines Vier-Wege-Katalysators 44 im Vergleich zu einer aus dem Stand der Technik bekannten konventionellen Regeneration des Partikelfilters 24 oder des Vier-Wege-Katalysators 44 mittels eines (leicht) überstöchiometrischen Verbrennungsluftverhältnisses dargestellt. Dabei sind fünf unterschiedliche Regenerationszyklen I - V eines Partikelfilters 24 oder Vier-Wege-Katalysators 44, sowie die Stickoxid-Emissionen vor und nach dem Ottopartikelfilter OPF über die Zeit t aufgetragen. Dabei nimmt der Sauerstoffüberschuss des Verbrennungsluftverhältnisses von dem ersten Regenerationszyklus I bis zum fünften Regenerationszyklus V zu. In der untersten Darstellung in Figur 4 sind der Sollwert des Verbrennungsluftverhältnisses λ_{S} sowie das tatsächlich an der ersten Lambdasonde 30 stromaufwärts des Partikelfilters 24 oder Vier-Wegekatalysators 44 gemessene Verbrennungsluftverhältnis λ_{vorOPF} dargestellt. Dabei wird die erste Regeneration I des Partikelfilters 24 oder des Vier-Wege-Katalysators 44 bei einem Lambda von etwa 1,02, die zweite Regeneration II bei einem Lambda von etwa 1,04, die dritte Regeneration III bei einem Lambda von etwa 1,06, die vierte Regeneration IV bei einem Lambda von etwa 1,08 und die fünfte Regeneration V bei einem Lambda von etwa 1,1 durchgeführt.

In der oberen Darstellung von Figur 4 sind die Rohemissionen des Verbrennungsmotors 10 an Stickoxiden NOx vor dem Partikelfilter 24 oder dem Vier-Wege-Katalysator 44 dargestellt. Es ist zu erkennen, dass die Stickoxidemissionen bei einem leicht überstöchiometrischen Verbrennungsluftverhältnis von etwa 1,02 ≤ λ ≤ 1,04 besonders hoch sind, da hier besonders ungünstige Reaktionsbedingungen mit hohen Temperaturen im Brennraum und fehlenden Reduktionspartnern vorliegen, welche eine Stickoxidbildung begünstigen. Bei steigendem Sauerstoffüberschuss nehmen die Rohemissionen wie bei Regeneration IV und Regeneration V zu sehen deutlich ab. Zudem nehmen die Kohlenstoffdioxidemissionen spürbar ab, da weniger Energie zum Aufheizen des Partikelfilters 24 oder des Vier-Wege-Katalysators 44 benötigt wird und zudem eine stärkere Entdrosselung der Ansaugluft möglich ist, was ebenfalls verbrauchsenkend wirkt.

In der mittleren Darstellung in Figur 4 sind die Stickoxid-Emissionen stromabwärts des Partikelfilters 24 oder des Vier-Wege-Katalysators 44 dargestellt. Dabei ist zu erkennen, dass diese Emissionen ebenfalls bei den höheren Sauerstoffüberschüssen der vierten Regeneration IV und der fünften Regeneration V niedriger ausfallen. Zudem verkürzt sich durch den größeren Sauerstoffüberschuss und die damit verbundenen höheren Umsatzraten bei der Oxidation der Rußpartikel die Regeneration des Partikelfilters 24 oder des Vier-Wege-Katalysators 44.

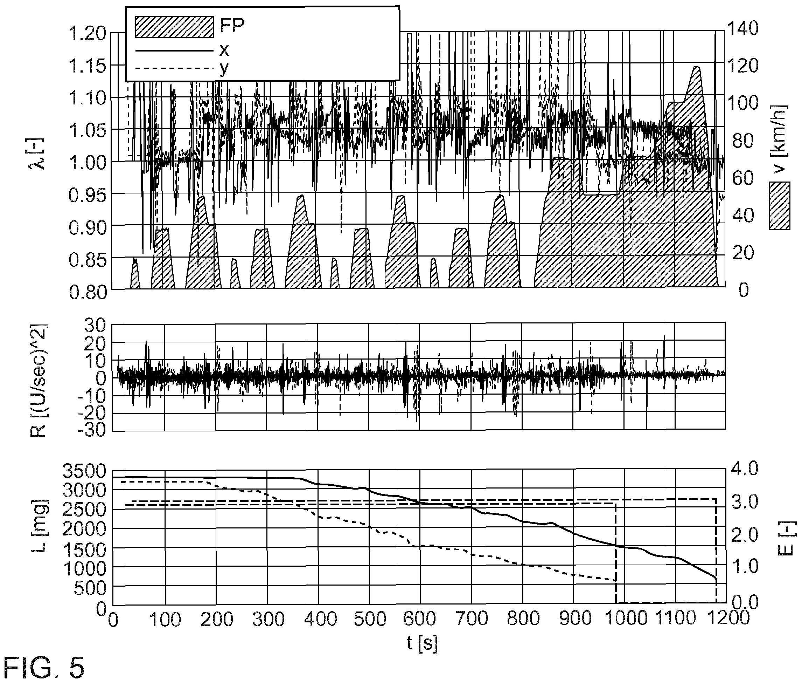

In Figur 5 ist die Regeneration eines Partikelfilters 24 in einem typischen Prüfzyklus des NEFZ dargestellt. Dabei sind das Verbrennungsluftverhältnis λ, eine Kennzahl R für die Laufruhe des Verbrennungsmotors 10 und die Beladung L des Partikelfilters 24 über die Zeit dargestellt. Dabei ist in einer ersten Kurve X eine Regeneration nach dem Stand der Technik und im Vergleich dazu eine Regeneration mit einem erfindungsgemäßen Verfahren zur Regeneration eines Partikelfilters 24 dargestellt, bei dem die Regeneration mit einem erhöhten Sauerstoffüberschuss und einer parallel aktivierten Funkenbandzündung erfolgt. Zudem ist in der oberen Darstellung in Figur 5 das Fahrprofil FP des NEFZ-Prüfzyklus dargestellt. Wie in der mittleren Darstellung in Figur 5 zu erkennen ist, kommt es durch das erfindungsgemäße Verfahren zu keiner Verschlechterung der Laufruhe R des Verbrennungsmotors 10. Hingegen ist aus der unteren Darstellung in Figur 5 zu entnehmen, dass die Regeneration des Partikelfilters 24 deutlich schneller abläuft und bei gleicher Ausgangsbeladung sowohl früher beginnt, als auch deutlich früher als bei dem aus dem Stand der Technik bekannten Verfahren abgeschlossen ist

### Bezugszeichenliste

- 10: Verbrennungsmotor
- 12: Zündkerze
- 14: Brennraum
- 16: Auslass
- 18: Einlass

- 20: Abgasanlage
- 22: Abgasturbolader
- 24: Partikelfilter
- 26: Drei-Wege-Katalysator
- 28: Abgaskanal

- 30: erste Lambdasonde
- 32: zweite Lambdasonde
- 34: erste Signalleitung
- 36: zweite Signalleitung
- 38: Sensoranordnung

- 40: Steuergerät
- 42: katalytisch wirksame Beschichtung
- 44: Vier-Wege-Katalysator
- 46: Zündverteiler
- 48: NOx-Sensor

- 50: Luftversorgungssystem
- 52: Luftfilter
- 54: Drosselklappe
- 56: Verdichter
- 58: Frischluftkanal
- E: Eskalationslevel
- FWC: Vier-Wege-Katalysator
- FP: Fahrprofil
- L: Beladung des Partikelfilters / Vier-Wege-Katalysators
- NOx: Stickoxidemissionen
- OPF: Otto-Partikelfilter
- OSC: Sauerstoffspeicherfähigkeit
- OSC_{P}: Sauerstoffspeicherfähigkeit des Partikelfilters
- OSC_{TWC}: Sauerstoffspeicherfähigkeit des ersten Drei-Wege-Katalysators

- R: Laufruhe
- T: Temperatur
- TWC: Drei-Wege-Katalysator
- mg: Milligramm
- s: Sekunde
- v: Geschwindigkeit

- λ: Verbrennungsluftverhältnis
- λ₁: Abgasluftverhältnis an der ersten Lambdasonde
- λ₂: Abgasluftverhältnis an der zweiten Lambdasonde
- λ_{S}: Sollwert des Verbrennungsluftverhältnisses

- I: Partikelfilterregeneration bei λ = 1,02
- II: Partikelfilterregeneration bei λ = 1,04
- III: Partikelfilterregeneration bei λ = 1,06
- IV: Partikelfilterregeneration bei λ = 1,08
- V: Partikelfilterregeneration bei λ = 1,10

- X: Ausgangssituation
- Y: Situation mit aktivierter Funkenbandzündung

## Patentansprüche

1. Verfahren zur Regeneration eines Partikelfilters (24) oder eines Vier-Wege-Katalysators (44) in einer Abgasanlage (20) eines Verbrennungsmotors (10), umfassend folgende Schritte:
- Betreiben des Verbrennungsmotors (10) mit einem stöchiometrischen Verbrennungsluftverhältnis (λ = 1), wobei das Abgas des Verbrennungsmotors (10) durch die Abgasanlage (20) geleitet wird und die im Abgas enthaltenen Rußpartikel sich an der Oberfläche des Partikelfilters (24) oder des Vier-Wege-Katalysators (44) abscheiden,
- Einleiten einer Regeneration des Partikelfilters (24) oder des Vier-Wege-Katalysators (44), wenn der Partikelfilter (24) oder der Vier-Wege-Katalysator (44) einen festgelegten Beladungszustand erreicht oder überschritten haben,
- Regeneration des Partikelfilters (24), wobei der Verbrennungsmotor (10) mit einem überstöchiometrischen Verbrennungsluftverhältnis (λ > 1) betrieben wird und zeitgleich die Zündenergie, die Zünddauer und/oder die Anzahl der Zündungen pro Verbrennungszyklus erhöht werden, um eine Zündung des überstöchiometrischen Verbrennungsluftverhältnisses in den Brennräumen (14) des Verbrennungsmotors (10) sicherzustellen.

2. Verfahren zur Regeneration eines Partikelfilters (24) nach Anspruch 1, **dadurch gekennzeichnet, dass** die Zündung des Verbrennungsluftgemischs während der Regeneration des Partikelfilters (24) oder des Vier-Wege-Katalysators (26) durch eine Mehrfachzündung erfolgt.

3. Verfahren zur Regeneration eines Partikelfilters (24) nach Anspruch 2, **dadurch gekennzeichnet, dass** die Mehrfachzündung in Form einer Funkenbandzündung erfolgt.

4. Verfahren zur Regeneration eines Partikelfilters (24) nach einem der Ansprüche 1 bis 3, **dadurch gekennzeichnet, dass** das überstöchiometrische Verbrennungsluftverhältnis während der Regeneration des Partikelfilters größer als 1,06 gewählt wird.

5. Verfahren zur Regeneration eines Partikelfilters (24) nach einem der Ansprüche 1 bis 4, **dadurch gekennzeichnet, dass** die Zündenergie, die Zünddauer und/oder die Anzahl der Zündungen nach der vollständigen Regeneration des Partikelfilters (24) oder des Vier-Wege-Katalysators (44) wieder reduziert wird.

6. Verfahren nach einem der Ansprüche 1 bis 5, **dadurch gekennzeichnet, dass** die Regeneration des Partikelfilters (24) oder des Vier-Wege-Katalysators (44) bei einer Beladung von 2500 mg oder mehr eingeleitet wird.

7. Verfahren nach einem der Ansprüche 1 bis 6, **dadurch gekennzeichnet, dass** ein Öffnungswinkel einer Drosselklappe (54) in einem Luftversorgungssystem (50) des Verbrennungsmotors (10) zur Regeneration des Partikelfilters (24) oder des Vier-Wege-Katalysators (44) vergrößert wird.

8. Verfahren nach einem der Ansprüche 1 bis 7, **dadurch gekennzeichnet, dass** der Regenerationsphase des Partikelfilters (24) oder des Vier-Wege-Katalysators (44) eine Heizphase vorgeschaltet ist, wobei in die Zündung des Verbrennungsluftgemischs mit der Zündenergie, Zünddauer und Zündanzahl des Normalbetriebs erfolgt.

9. Verfahren nach Anspruch 1 oder Anspruch 2, **dadurch gekennzeichnet, dass** die Anhebung der Zündenergie, der Zünddauer oder der Anzahl der Zündungen mittels einer Laserzündung erfolgt.

10. Verfahren nach Anspruch 1 oder Anspruch 2, **dadurch gekennzeichnet, dass** die Anhebung der Zündenergie, der Zünddauer oder der Anzahl der Zündungen mittels einer Corona-Zündung erfolgt.

11. Verbrennungsmotor (10) mit mindestens einem Brennraum (14) und mindestens einem an dem Brennraum (14) angeordneten Zündelement (12) zur Fremdzündung eines in den mindestens einen Brennraum (14) eingebrachten Verbrennungsluftgemischs, sowie mit einer Abgasanlage (20), welche mit einem Auslass (16) des Verbrennungsmotors (10) verbunden ist, wobei in der Abgasanlage (20) zumindest ein Partikelfilter (24) und ein Drei-Wege-Katalysator (26) oder ein Vier-Wege-Katalysator (26) angeordnet sind, **dadurch gekennzeichnet, dass** der Verbrennungsmotor (10) ein Steuergerät (40) aufweist, welches dazu eingerichtet ist, ein Verfahren nach einem der Ansprüche 1 bis 10 durchzuführen, wenn ein maschinenlesbarer Programmcode auf dem Steuergerät (40) ausgeführt wird.
